# EUROPÄISCHE PATENTSCHRIFT

(11) **EP 2 388 562 B1**
(45) Veröffentlichungstag und Bekanntmachung des Hinweises auf die Patenterteilung: **22.01.2020**
(21) Anmeldenummer: 11003584.7
(22) Anmeldetag: 03.05.2011
(51) Int. Cl.: G01J 5/04, G01J 5/08, G01J 5/00

(54) **Sensoranordnung zur Temperaturmessung sowie Verfahren zum Messen**
Sensor assembly for measuring temperature and measuring method
Agencement de capteur pour la mesure de température et procédé de mesure

(30) Priorität: 17.05.2010 DE 102010020715
(43) Veröffentlichungstag der Anmeldung: 23.11.2011
(73) Patentinhaber: Heraeus Electro-Nite International N.V., 3530 Houthalen (BE)
(72) Erfinder: Cuypers, Jan, 3510 Kermt (BE); Indeherberge, Valère, 3520 Zonhoven (BE)
(74) Vertreter: Heraeus IP

(56) Entgegenhaltungen:
- DE-B3- 10 331 125
- US-A- 6 004 031
- H. Stöcker: "Taschbuch der Physik", 1994, Verlag Harri Deutsch, Frankfurt am Main, XP002664776, ISBN: 3-8171-1358-7 * Seite 565 * * Seite 589 *

## Beschreibung

Die Erfindung betrifft eine Sensoranordnung zur Temperaturmessung in Schmelzen, insbesondere in Metall- oder Kryolithschmelzen mit einem Schmelzpunkt oberhalb 600 °C, mit einem Behälter, der an seiner Oberseite eine Öffnung aufweist und in dem ein Temperatursensor angeordnet ist. Die Erfindung betrifft auch ein Verfahren zum Messen mit einer solchen Sensoranordnung. Derartige Messeinrichtungen und Sensoranordnungen sind beispielsweise aus DE 44 33 685 C2 bekannt. Dort ist beschrieben, dass an einem Trägerkörper ein Thermoelement angeordnet ist. Dieses Thermoelement ragt in einen Behälter hinein, in dem die Abkühlungstemperatur der Schmelze gemessen wird. Weitere Sensoranordnungen zum Messen von Temperaturen in Schmelzen sind aus DE 103 31 124 B3 bekannt, wobei Glasfasern als Sensorelement benutzt werden. In EP 1 034 419 B1 ist eine Sensoranordnung beschrieben, die ähnlich wie in DE 44 33 685 C2 ein Thermoelement benutzt. Ein weiterer Temperatursensor ist beispielsweise aus JP 07 229 791 A bekannt. Hier wird mit einer Glasfaser gemessen, die die Strahlung aus der Schmelze aufnimmt und an eine Auswerteeinheit weiterleitet, in der aus der aufgenommenen Strahlung die Temperatur in bekannter Weise bestimmt wird.

US 6,004,031 beschreibt weiterhin eine Sensoranordnung zur Temperaturmessung in Schmelzen. Die Anordnung umfasst ein Mantelrohr mit einer Beschichtung aus Isolationsmaterial und eine Lichtleitfaser, die in dem Mantelrohr angeordnet ist. Für eine Temperaturmessung wird die Spitze des beschichteten Mantelrohrs mit einer Schmelze in Kontakt gebracht. In der beschriebenen Sensoranordnung wird das Mantelrohr zusammen mit der Lichtleitfaser in die Schmelze gegeben.

DE 103 31 125 B3 betrifft darüber hinaus ein Verfahren zum Abgleichen von Messsignalen, die mit optischen Fasern erhalten werden. Die beschriebene optische Faser weist eine Hülle und einen Kern auf und ist sowohl seitlich als auch stirnseitig von einem Referenzmaterial umgeben. Für das beschriebene Verfahren wird die optische Faser mit Hülle und Referenzmaterial in eine Schmelze gegeben.

Aufgabe der vorliegenden Erfindung ist es, die vorhandenen Vorrichtungen zu verbessern und insbesondere für die Messungen in Kryolithschmelzen eine Sensoranordnung zur Verfügung zu stellen, mit der eine schnelle und genaue Messung möglich ist.

Die Aufgabe wird durch die Merkmale der unabhängigen Ansprüche gelöst. Vorteilhafte Ausgestaltungen sind in den abhängigen Ansprüchen angegeben. Dadurch, dass der Temperatursensor ein in den Behälter ragendes Rohr aufweist, in dem eine Lichtleitfaser angeordnet ist, die an ihrer Mantelfläche anliegend ein Mantelrohr aufweist, wobei das Rohr an seinem in dem Behälter angeordneten Ende geschlossen ist, können einerseits die vorteilhaften Eigenschaften der Messung mit Lichtleitfasern genutzt werden und andererseits ist die Lichtleitfaser ausreichend vor Beschädigung geschützt, dadurch, dass sie in einem gasdicht geschlossenen Rohr angeordnet ist. Die Lichtleitfaser kann über ihre gesamte Länge in einem inneren, üblichen Metallschutzrohr (Mantelrohr) angeordnet sein. Dieses umgibt die Lichtleitfaser eng anliegend, um z.B. beim Biegen der Lichtleitfaser zu verhindern, dass sie bricht. Der Behälter kann zur Liquidusmessung benutzt werden, in dem er zunächst in die Schmelze eingetaucht und mit dieser gefüllt wird und dass nach dem Herausziehen aus der Schmelze die Erstarrungskurve bzw. der Temperaturverlauf während der Erstarrung mit Hilfe der Lichtleitfaser gemessen wird. Unter anderem um eine Unterkühlung der zu analysierenden Schmelze zu verhindern, kann der Behälter mit einem Vibrator starr verbunden sein. Der Behälter ist an einem Träger angeordnet, der wiederum zum Eintauchen in die Schmelze geeignet ist und der mittels einer Lanze in die Schmelze eingetaucht wird. Die Lanze kann eine bekannte Vibrationslanze sein, um die Vibration des Behälters zu realisieren.

Vorteilhaft hat es sich erwiesen, dass das Rohr entweder
a) aus Stahl, insbesondere aus Edelstahl gebildet ist und einen Wärmewiderstand von höchstens 155 m²KµW⁻¹, insbesondere zwischen 3,5 und 153 m²KµW⁻¹ aufweist oder
b) aus Kupfer gebildet ist und einen Wärmewiderstand von höchstens 6 m²KµW⁻¹, insbesondere zwischen 0,1 und 5,1 m²KµW⁻¹ aufweist oder
c) aus Quarzglas gebildet ist und einen Wärmewiderstand von höchstens 205 m²KµW⁻¹, insbesondere zwischen 5,0 und 202,1 m²KµW⁻¹ aufweist.

Das Rohr kann insbesondere aus einer Kupferlegierung gebildet sein. Durch die spezielle Ausbildung des Rohres auf die Temperatur der Schmelze ist gewährleistet und gleichzeitig gesichert, dass das Rohr die Strahlung ausreichend gut abstrahlt, so dass die Lichtleitfaser sie mit hoher Genauigkeit aufnehmen kann. Zum Schutz vor Zerstörung in der Schmelze kann das Rohr vorteilhafterweise beschichtet sein, insbesondere mit Kupfer oder Molybdän oder mit einer Keramik, insbesondere mit Aluminiumoxyd. Das Rohr weist zweckmäßigerweise einen Außendurchmesser von höchstens 5 mm auf, die Wandstärke des Rohres beträgt vorzugsweise höchstens 2 mm. Dadurch ist einerseits die notwendige Stabilität gewährleistet und andererseits kann die Wärme optimal aufgenommen und als Strahlung abgegeben werden. Das geschlossene Ende des Rohres weist einen Abstand von 0,1 bis 5 mm, vorzugsweise etwa 3 mm vom Boden des Behälters auf, um eine hohe Messgenauigkeit zu erzielen. Bei einem vorzugsweise gequetschten Rohrende hat es sich gezeigt, dass ein Verhältnis von verbleibender offener Querschnittsfläche in dem gequetschten Inneren des Rohres zur Länge des gequetschten Rohrteils (in Rohrlängsrichtung gemessen) < 0,5 mm, insbesondere, optimalerweise etwa 0,05 mm beträgt.

Bei der Vorrichtung nach Anspruch 1 kann das Rohr auf verschiedene Weise geschlossen sein. Grundsätzlich ist ein geschlossenes Rohr im Sinne jeder der beschriebenen Sensoranordnungen ein solches, bei dem das Eintauchende gasdicht geschlossen ist, wodurch die Lichtleitfaser geschützt wird. Das Rohr kann also sowohl zusammengedrückt oder an seinem Ende zusammengeschmolzen sein. Die Lichtleitfaser kann über ihre gesamte Länge in einem inneren, üblichen Metallschutzrohr (Mantelrohr) angeordnet sein. Dieses umgibt die Lichtleitfaser eng anliegend, um z.B. beim Biegen der Lichtleitfaser zu verhindern, dass sie bricht. Vorteilhaft für diese zweite Sensoranordnung ist es, dass mit einer einfachen Anordnung die Temperatur der Schmelze bestimmt werden kann. Auch diese Sensoranordnung kann zweckmäßigerweise mit einem Vibrator starr verbunden sein, wobei der Vibrator wie bereits oben beschrieben an einer bekannten Vibrationslanze angeordnet sein kann. Die Vibrationslanze nimmt ein Trägerrohr für den Temperatursensor auf, wobei der Temperatursensor vorzugsweise am Ende des Trägerrohres angeordnet ist.

Die Sensoranordnung ist insbesondere so ausgebildet, dass das Rohr entweder
a) aus Stahl, insbesondere aus Edelstahl gebildet ist und einen Wärmewiderstand von höchstens 155 m²KµW⁻¹, insbesondere zwischen 3,5 und 153 m²KµW⁻¹ aufweist oder
b) aus Kupfer gebildet ist und einen Wärmewiderstand von höchstens 6 m²KµW⁻¹, insbesondere zwischen 0,1 und 5,1 m²KµW⁻¹ aufweist oder
c) aus Quarzglas gebildet ist und einen Wärmewiderstand von höchstens 205 m²KµW⁻¹, insbesondere zwischen 5,0 und 202,1 m²KµW⁻¹ aufweist.

Auch bei dieser Anordnung ist das Rohr vorzugsweise aus einer Kupferlegierung gebildet, es kann mit einer Schutzschicht aus beispielsweise Kupfer oder Molybdän oder einer Keramik, insbesondere aus Aluminiumoxyd beschichtet sein. Das Rohr weist vorteilhafterweise einen Außendurchmesser von höchstens 5 mm und eine Wandstärke von höchstens 2 mm auf. Auch hier hat es sich bei einem vorzugsweise gequetschten Rohrende gezeigt, dass ein Verhältnis von verbleibender offener Querschnittsfläche in dem gequetschten Inneren des Rohres zur Länge des gequetschten Rohrteils (in Rohrlängsrichtung gemessen) < 0,5 mm, insbesondere, optimalerweise etwa 0,05 mm beträgt.

Die vorstehend beschriebenen Sensoranordnungen können insbesondere für die Temperaturmessungen in Schmelzen mit einem Schmelzpunkt von mehr als 600 °C, insbesondere in Stahlschmelzen oder Kryolithschmelzen, verwendet werden.

Gemäss dem Verfahren nach Anspruch 10 zum Messen mit einer vorstehend beschriebenen Sensoranordnung ist dadurch gekennzeichnet, dass das Eintauchende der an einer Trägerlanze angeordneten Sensoranordnung in die Schmelze getaucht wird, dass danach mindestens der eingetauchte Teil des Rohres auf eine Temperatur zwischen 350 °C und 800 °C aufgeheizt wird, dass nach Erreichen dieser Aufheiztemperatur die Lichtleitfaser in das Rohr eingeschoben wird und eine Vibration des Rohres beginnt und dass anschließend die Temperatur der Schmelze gemessen wird. Vorteilhaft ist es, dass danach die Sensoreinrichtung aus der Schmelze gezogen und von der Trägerlanze abgenommen wird und dass das Ende der Lichtleitfaser entfernt wird. Durch das Entfernen des Endes der Lichtleitfaser kann diese in dem Rohr nachgeführt und erneut zur Temperaturmessung verwendet werden, ohne dass die Qualität der Messung durch eine temperaturbedingte Zerstörung der Lichtleitfaser leidet.

Nachfolgend werden Ausführungsbeispiele der Erfindung anhand von Zeichnungen näher beschrieben. In den Zeichnungen zeigt:
- Fig. 1: die schematische Darstellung einer Vorrichtung mit erfindungsgemäßer Sensoranordnung
- Fig. 2: eine analoge Vorrichtung mit weiterer Sensoranordnung
- Fig. 3a,b: erfindungsgemäße Sensoranordnungen im Querschnitt
- Fig. 4: weitere erfindungsgemäße Sensoranordnung im Querschnitt
- Fig. 5a-c: Darstellung des Verfahrensablaufs
- Fig. 6a-c: alternativer Verfahrensablauf.

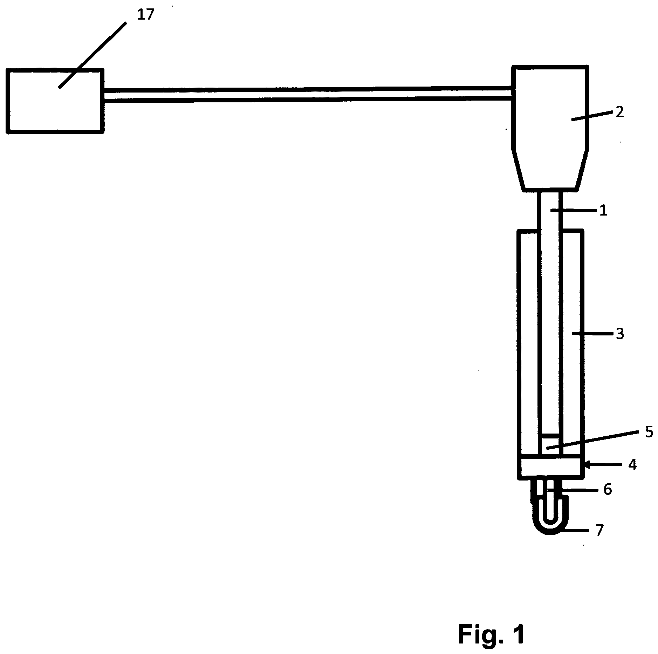

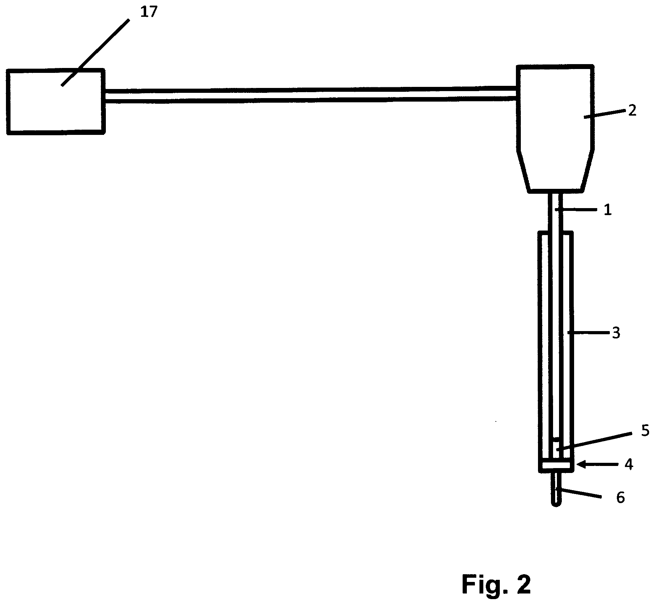

Die in den Figuren 1 und 2 dargestellte Vorrichtung umfasst eine Trägerlanze 1, die über einen Vibrator 2 mit einer Faservorschubeinrichtung 17 und weiterhin mit einer nicht dargestellten Steuereinheit verbunden ist und die in ein aus Pappe gebildetes Trägerrohr 3 der Sensoranordnung 4 eingesteckt ist und an ihrem unteren Ende mit einer Kupplung 5 der Sensoranordnung 4 verbunden ist. Der Vibrator 2 überträgt über die Trägerlanze 1 und die Kupplung 5 eine Vibration auf die Sensoranordnung 4. Des Weiteren enthält die Anordnung eine Faservorschubeinrichtung 17 zur Zuführung einer Lichtleitfaser in das Rohr 6 der Sensoranordnung 4. Die Figuren 1 und 2 zeigen unterschiedliche Ausführungsformen der Sensoranordnung 4, wobei in Fig. 1 das Rohr 6 in einen Behälter 7 hineinragt, so dass diese Anordnung zur Ermittlung von Schmelzpunkten und Erstarrungspunkten verwendet werden kann, während die Anordnung nach Fig. 2 zur reinen Temperaturmessung verwendet wird.

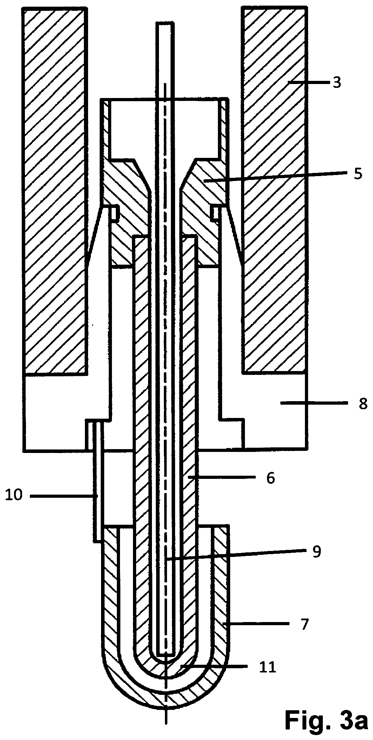

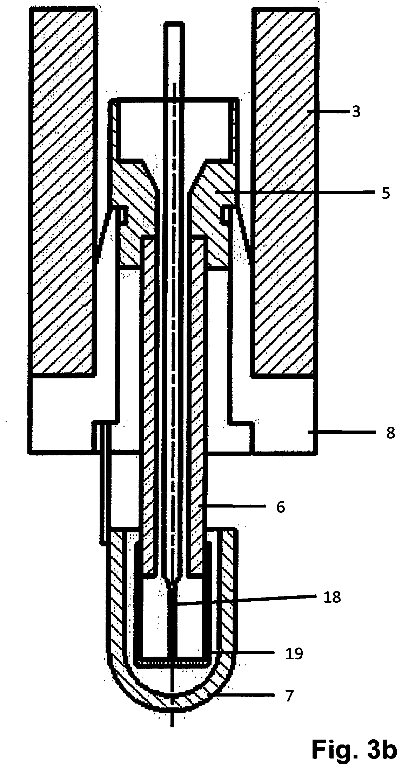

Fig. 3a zeigt Details der Sensoranordnung 4 nach Fig. 1. Erkennbar ist dabei an der in Eintauchrichtung der Vorrichtung gelegenen Stirnseite des Trägerrohres 3 ein Messkopf 8 angeordnet. Der Messkopf 8 ist bevorzugt aus Keramik gebildet, kann aber auch aus Zement, Metall oder Formsand oder einer Kombination mehrerer dieser Materialien gebildet sein. An dem rückwärtigen, im Inneren des Trägerrohres 3 angeordneten Ende des Messkopfes ist die Kupplung 5 fixiert. Am Eintauchende der Kupplung 5 ist das Rohr 6 angeordnet, in dem wiederum die Lichtleitfaser 9 angeordnet ist. Die Lichtleitfaser 9 ist aus Quarzglas gebildet, das an seiner Mantelfläche eng anliegend ein Mantelrohr aus Stahl als Außenschicht aufweist, welches zum Schutz des Quarzglases vor mechanischer Beschädigung dient. Die Lichtleitfaser 9 ist beweglich in dem Rohr 6 angeordnet. Das Rohr 6 ist aus Edelstahl gebildet und weist einen Wärmewiderstand zwischen 3,5 und 135 m²KµW⁻¹ auf. Das Rohr 6 kann auch aus Kupfer gebildet sein und einen Wärmewiderstand zwischen 0,1 und 5,1 m²KµW⁻¹ aufweisen oder aus Quarzglas, wobei es einen Wärmewiderstand zwischen 5,0 und 202,1 m²KµW⁻¹ aufweist. Das Rohr 6 weist einen Außendurchmesser von höchstens 4 mm und eine Wandstärke von höchstens 1 mm auf. Es ragt in den Behälter 7, der aus Stahl gebildet ist, hinein. Fig. 3b zeigt eine ähnliche Anordnung, wobei das Rohr 6' an seinem Eintauchende offen ist. Dafür ist das Mantelrohr der Lichtleitfaser 9 an seinem Eintauchende 18 durch eine Quetschung geschlossen. An dem Rohr 6' ist an seinem Eintauchende ein Metallstreifen als Anschlag 19 U-förmig angeordnet, bis zu dem das gequetschte Ende des Mantelrohres der Lichtleitfaser 9 geschoben wird und der somit der Positionierung des Endes der Lichtleitfaser 9 in dem Behälter 7 dient.

Der Behälter 7 ist mittels Stahlstreben 10 an dem Messkopf 8 fixiert. Er hat ein Volumen von allgemein etwa zwischen 2 und 6 cm³, insbesondere von etwa 4 cm³, wobei seine innere Höhe etwa 28 mm und sein innerer Durchmesser etwa 14 mm beträgt. An seiner Unterseite ist der Behälter abgerundet. Der Abstand des unteren Endes des Rohres 6 von dem Boden des Behälters 7 beträgt etwa 3 mm. Das Rohr 6 gemäß Fig. 3a ist an seinem unteren Ende 11 gasdicht geschlossen. Der gasdichte Verschluss kann realisiert werden durch eine Quetschung des Rohres 6 oder durch ein Zusammenschweißen des vorderen Endes des Rohres, z.B. in Form einer Halbkugel. Hierbei ist eine absolute Dichtheit nicht erforderlich, es genügt, wenn die Schmelze, in der gemessen werden soll, also beispielsweise eine Kryolith- oder Stahlschmelze, die Lichtleitfaser 9 nicht angreifen kann. Bei einem gequetschten Rohrende oder Mantelrohrende hat es sich gezeigt, dass ein Verhältnis von verbleibender offener Querschnittsfläche in dem gequetschten Rohrinneren zur Länge des gequetschten Rohrteils des Rohres 6 oder des Mantelrohres der Lichtleitfaser 9 (in Rohrlängsrichtung gemessen) < 0,5 mm, insbesondere, optimalerweise etwa 0,05 mm beträgt. Der Verschluss kann also auch direkt an der Lichtleitfaser, also durch einen Verschluss des das Quarzglas umgebenden Mantelrohres (Stahlrohr) realisiert sein (Fig. 3b). Mittels des geschlossenen unteren Endes 11 des Rohres 6 wird gewährleistet, dass die Lichtleitfaser 9 in die zur Messung optimale Position gebracht wird. Sie kann nämlich bis zum geschlossenen unteren Ende 11 in das Rohr 6 hineingeschoben werden (oder bis an den Anschlag 19 nach Fig. 3b), bis sie also dort anstößt und ist damit in der optimalen Position innerhalb des Behälters 7, also in dessen sogenannten thermischem Zentrum angeordnet.

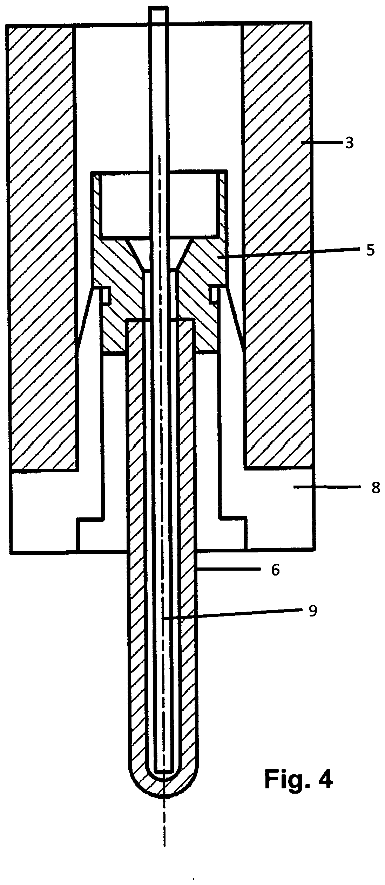

Die in Fig. 4 dargestellte Sensoranordnung zeigt einen den Fig. 3a, 3b prinzipiell gleichen Aufbau, wobei das Rohr 6 mit der Lichtleitfaser 9 nicht in einem Behälter 7 angeordnet ist, so dass es der Temperaturmessung innerhalb des Schmelzbades dient, nicht jedoch zur Ermittlung einer Aufheiz- oder Abkühlkurve verwendet werden kann, wie dies mit einer Anordnung einer Lichtleitfaser 9 innerhalb eines Behälters 7 gemäß der Fig. 3a oder 3b möglich ist. Ein solcher Behälter 7 kann in bekannter Weise durch Eintauchen in einen Schmelzenbehälter mit der zu messenden Schmelze gefüllt, dann herausgezogen werden, wobei die Messung der Abkühlkurve erfolgt. Bei einem Wiedereintauchen kann gegebenenfalls die Aufheizkurve gemessen werden.

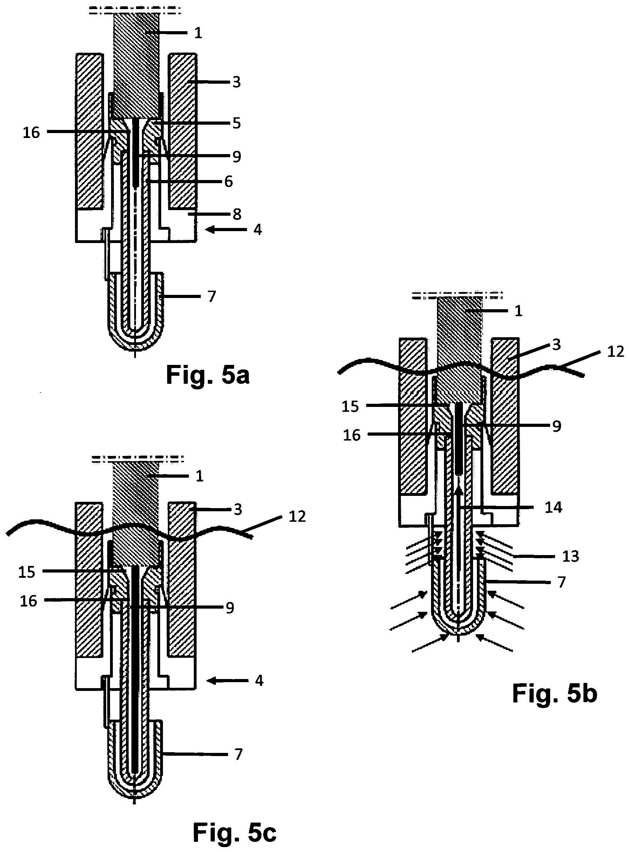

Fig. 5a - 5c zeigt eine Messung mit einem sogenannten selbstführenden Mechanismus, bei dem der Faservorschub automatisch erfolgt. Ein weiterer Temperatursensor für die Bestimmung des Zeitablaufs des Faservorschubs wird nicht benötigt. Der Messzyklus wird gestartet, nachdem die Sensoranordnung mit dem Trägerrohr 3 an der Trägerlanze 1 angeordnet wurde. Die Sensoranordnung 4 mit dem an dem Trägerrohr 3 angeordneten Messkopf 8 wird so in die Schmelze eingetaucht, dass zumindest der Behälter 7 und die dem Behälter 7 zugewandte Stirnseite des Messkopfes 8 in die Schmelze eingetaucht wird. Dabei befindet sich, wie in Fig. 5a dargestellt, die Lichtleitfaser 9 in ihrer Ausgangsposition. Nach Eintauchen der Sensoranordnung 4 in die Schmelze ist der Badspiegel 12 der Schmelze oberhalb des Messkopfes 8 angeordnet (Fig. 5b, 5c). Um das geschlossene Ende des Rohres 6 herum erhöht sich die Temperatur, die Wärmestrahlung 13 wirkt auf das Rohr 6, ein Teil 14 der Strahlung wird von der Lichtleitfaser 9 aufgenommen. Diese ist zu diesem Zeitpunkt noch etwa 50 mm von der Schmelze beabstandet, aber nahe genug, um eine Temperatur zwischen etwa 270° C und etwa 800 °C zu messen. Nach Erreichen einer Temperatur von etwa 500 °C wird von der Steuereinheit ein Signal an den Vibrator 2 abgegeben zum Start der Vibration. Gleichzeitig wird ein Signal zum Vorschubmechanismus 17 für die Lichtleitfaser gesendet, so dass deren Eintauchende innerhalb von weniger als 10 Sekunden, vorzugsweise innerhalb von etwa 2 - 3 Sekunden an das geschlossene Ende des Rohres 6 herangeführt wird und sich dann in Messposition befindet (Fig. 5c). Der Vorgang verläuft bis dahin ohne Eingreifen eines Operators. Dann erfolgt die Messung der Badtemperatur, danach wird die Trägerlanze 1 mit der Sensoranordnung 4 aus der Schmelze herausgezogen, so dass der in dem Behälter 7 verbleibende Teil der Schmelze beginnt zu erstarren und die Erstarrungstemperatur gemessen wird. Ein Signal leitet diesen Vorgang des Herausziehens ein, ein weiteres Signal zeigt das Ende der Messung der Abkühlkurve an. Dieses Signal kann entweder zeit- oder temperaturgesteuert sein. Anschließend entfernt ein Operator die Sensoranordnung 4 mit dem Trägerrohr 3 von der Messlanze 1, wobei ein etwa 60 mm langes Ende der Lichtleitfaser 9 aus der Trägerlanze 1 herausragt. Dieses Ende wird abgeschnitten, wobei ein etwa 10 mm langes Ende der Lichtleitfaser, die dann an ihrem Eintauchende offen, also nicht von einem umhüllenden Stahlmantel bedeckt ist, verbleibt. Dann wird eine neue Sensoranordnung 4 mit einem neuen Trägerrohr 3 auf die Trägerlanze 1 aufgesteckt. Das etwa 10 mm lange Ende der Lichtleitfaser ist zentrisch zu der Kupplung angeordnet, deren Durchführung mit einer konischen Öffnung 15 beginnt, so dass die Lichtleitfaser 9 problemlos durch die zentrische, axialsymmetrische Öffnung 16 der Kupplung 5 in das Rohr 6 hineingleitet. Ein neuer Messvorgang kann beginnen. Dieser automatisierte Vorgang führt zu einer Verringerung von operatorbedingten Fehlerquellen, beispielsweise dadurch, dass der Messvorgang und der Vorschub der Lichtleitfaser 9 automatisiert sind.

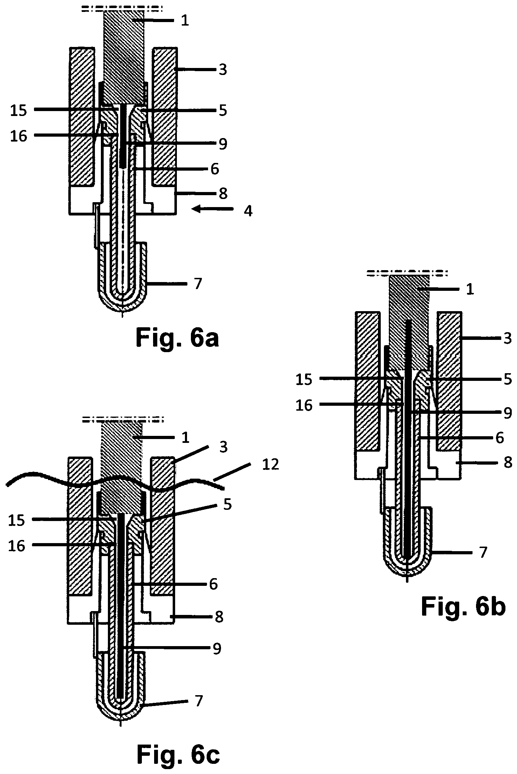

In Fig. 6a - 6c ist ein ähnlicher, manuell gesteuerter Vorgang dargestellt. Die Ausgangssituation (Fig. 6a) ist die gleiche wie bei der automatischen Verfahrensweise (vgl. Fig. 5a). Der Operator betätigt einen Druckknopf, der einen Timer/Zeitschalter für den Vorschubmechanismus 17 aktiviert. Dieser bringt die Lichtleitfaser 9 in weniger als 10 Sekunden, idealerweise in etwa 2 - 3 Sekunden in die Messposition (Fig. 6b). Danach wird der Eintauchmechanismus ausgelöst. Dabei wird die Trägerlanze 1 in Richtung der messenden Schmelze bewegt, bis der Messkopf 8 unterhalb des Badspiegels 12 angeordnet ist. Die Temperaturstrahlung wirkt auf die Lichtleitfaser 9. Wenn eine Temperatur von etwa 500 °C gemessen wird, wird über die Steuereinheit 2 die Vibration gestartet. Nach anschließendem Messen der Badtemperatur ertönt ein Signalton, die Lanze wird nach oben gezogen, so dass der Behälter 7 aus der Schmelze herauskommt und mit der in ihm verbleibenden zu messenden Schmelze abkühlt, so dass die Abkühlkurve gemessen werden kann. Das Ende dieser Messung wird wiederum signalisiert. Dabei sind jeweils Tonsignale oder Lichtsignale verwendbar. Das Austauschen der Sensoranordnung 4 mit dem Trägerrohr 3 erfolgt wie oben zu Fig. 5a - 5c beschrieben.

Die Vibration erfolgt in beiden beschriebenen Fällen sowohl am Behälter 7 als auch am Rohr 6, wobei die Vibration selbst über die Trägerlanze 1 übertragen wird. Die Vibration erfolgt mit einer Frequenz zwischen 20 und 1000 Hz, optimal zwischen 60 und 400 Hz, insbesondere bei etwa 260 Hz. Die Amplitude liegt zwischen 0,01 und 0,5 mm, optimal zwischen 0,05 und 0,25 mm und kann insbesondere bei 0,145 mm liegen. Sie wird von der Steuereinheit geregelt und kann auf den jeweiligen Typ der Sensoranordnung angepasst werden.

Das Abschneiden der Lichtleitfaser 9 kann manuell oder mit einem elektrischen Messer, beispielsweise einem Rotationsmesser oder in anderer geeigneter Weise erfolgen.

Wenn eine mit einer Metallschicht (einem Mantelrohr) an ihrer Mantelfläche umgebene Quarzglasfaser ein offenes Ende an ihrer Stirnseite hat, das heißt ein Ende, das nicht mit Metall verdeckt ist, und welche in direktem Kontakt mit einer Kryolithschmelze steht, wird dies sehr schnell degradiert bzw. zerstört, was zu Messfehlern führt. Wenn eine solche Faser keiner Vibration ausgesetzt wird, führt das zu einer langsameren (normalen) Zerstörung der Faser und zu einer genauen Messung der Temperatur. Prinzipiell kann damit die Badtemperatur sehr genau gemessen werden, die Liquidustemperatur, also der Übergang von der Schmelze zum Feststoff bzw. der Übergang vom Feststoff in die Schmelze kann damit nicht gemessen werden, dafür ist die Zerstörung der Faser zu langsam, so dass die sogenannte Liquiduskurve nicht exakt gemessen werden kann. Deshalb ist es vorteilhaft, die Lichtleitfaser 9 einer Vibration auszusetzen zur Verbesserung der Messergebnisse der Abkühlungs- bzw. Aufheizkurve zur Messung der sogenannten Liquidustemperatur.

## Patentansprüche

1. Sensoranordnung zur Temperaturmessung in Schmelzen, insbesondere in Kryolithschmelzen mit einem Schmelzpunkt oberhalb 600 °C, mit einem Temperatursensor, der ein Eintauchende (18) aufweist, mit einem an einem Träger angeordneten Behälter (7), der an seiner Oberseite eine Öffnung aufweist und in dem der Temperatursensor angeordnet ist, wobei der Temperatursensor ein in den Behälter ragendes Rohr (6) aufweist, in dem eine Lichtleitfaser (9) angeordnet ist, die an ihrer Mantelfläche anliegend ein Mantelrohr aufweist, wobei das Rohr (6) an seinem in dem Behälter (7) angeordneten Ende geschlossen ist, wobei das geschlossene Ende des Rohrs (6) einen Abstand von 0,1 bis 5 mm vom Boden des Behälters (7) aufweist, und wobei die Lichtleitfaser (9) beweglich in dem Rohr (6) angeordnet ist.

2. Sensoranordnung nach Anspruch 1, **dadurch gekennzeichnet, dass** der Behälter (7) mit einem Vibrator starr verbunden ist.

3. Sensoranordnung nach Anspruch 1 oder 2, **dadurch gekennzeichnet, dass** das Rohr (6) aus einer Kupferlegierung gebildet ist.

4. Sensoranordnung nach mindestens einem der Ansprüche 1 bis 3, **dadurch gekennzeichnet, dass** das Rohr (6) mit Kupfer oder Molybdän oder einer Keramik, insbesondere Aluminiumoxid, beschichtet ist.

5. Sensoranordnung nach mindestens einem der Ansprüche 1 bis 4, **dadurch gekennzeichnet, dass** das Rohr (6) einen Außendurchmesser von höchstens 5 mm aufweist.

6. Sensoranordnung nach mindestens einem der Ansprüche 1 bis 5, **dadurch gekennzeichnet, dass** die Wandstärke des Rohrs (6) höchstens 2 mm beträgt.

7. Sensoranordnung nach mindestens einem der Ansprüche 1 bis 6, **dadurch gekennzeichnet, dass** das geschlossene Ende des Rohrs (6) einen Abstand von etwa 3 mm vom Boden des Behälters (7) aufweist.

8. Sensoranordnung nach mindestens einem der Ansprüche 1 bis 7, **dadurch gekennzeichnet, dass** das geschlossene Ende des Rohres (6) durch Quetschung geschlossen ist, wobei das Verhältnis von verbleibender offener Querschnittsfläche in dem gequetschten Inneren des Rohres (6) zur Länge des gequetschten Rohrteils < 0.5 mm beträgt.

9. Verwendung einer Sensoranordnung nach mindestens einem der vorhergehenden Ansprüche für die Temperaturmessung in Schmelzen mit einem Schmelzpunkt von mehr als 600 °C, insbesondere in Kryolithschmelzen.

10. Verfahren zum Messen in Kryolithschmelzen mit einem Schmelzpunkt oberhalb 600 °C mit einer Sensoranordnung (4) nach mindestens einem der vorhergehenden Ansprüche, **dadurch gekennzeichnet, dass** das Eintauchende (18) der an einer Trägerlanze angeordneten Sensoranordnung (4) in die Schmelze getaucht wird, dass danach mindestens der eingetauchte Teil des Rohrs (6) auf eine Temperatur zwischen 350 und 800 °C aufgeheizt wird, dass nach Erreichen dieser Aufheiztemperatur die Lichtleitfaser (9) in das Rohr (6) eingeschoben wird und/oder eine Vibration des Rohres (6) beginnt und dass anschließend die Temperatur der Schmelze gemessen wird.

11. Verfahren nach Anspruch 10, **dadurch gekennzeichnet, dass** nach dem Messen der Temperatur die Sensoreinrichtung aus der Schmelze gezogen und von der Trägerlanze abgenommen wird und dass das Ende der Lichtleitfaser (9) entfernt wird.

## Claims

1. A sensor arrangement for temperature measurement in melts, in particular in cryolite melts, with a melting point of above 600°C, comprising a temperature sensor, which has an immersion end (18), comprising a container (7), which is arranged on a carrier and which has an opening on its upper side, and in which the temperature sensor is arranged, wherein the temperature sensor has a tube (6), which protrudes into the container and in which an optical fibre (9) is arranged, which has, abutting on its jacket surface, a jacket tube, wherein the tube (6) is closed on its end, which is arranged in the container (7), wherein the closed end of the tube (6) has a distance of between 0.1 and 5 mm from the base of the container (7), and wherein the optical fibre (9) is movably arranged in the tube (6).

2. The sensor arrangement according to claim 1, **characterised in that** the container (7) is rigidly connected to a vibrator.

3. The sensor arrangement according to claim 1 or 2, **characterised in that** the tube (6) is made of a copper alloy.

4. The sensor arrangement according to at least any one of claims 1 to 3, **characterised in that** the tube (6) is coated with copper or molybdenum or a ceramic, in particular aluminium oxide.

5. The sensor arrangement according to at least any one of claims 1 to 4, **characterised in that** the tube (6) has an outer diameter of maximally 5 mm.

6. The sensor arrangement according to at least any one of claims 1 to 5, **characterised in that** the wall thickness of the tube (6) is maximally 2 mm.

7. The sensor arrangement according to at least any one of claims 1 to 6, **characterised in that** the closed end of the tube (6) has a distance of approximately 3 mm from the base of the container (7).

8. The sensor arrangement according to at least any one of claims 1 to 7, **characterised in that** the closed end of the tube (6) is closed by means of squeezing, wherein the ratio of remaining open cross sectional surface in the squeezed interior of the tube (6) to the length of the squeezed tube part is < 0.5 mm.

9. Use of a sensor arrangement according to at least any one of the preceding claims for the temperature measurement in melts with a melting point of more than 600°C, in particular in cryolite melts.

10. A method for measuring cryolite melts with a melting point of above 600°C by means of a sensor arrangement (4) according to at least any one of the preceding claims, **characterised in that** the immersion end (18) of the sensor arrangement (14) arranged on a carrier lance is immersed into the melt, that at least the immersed part of the tube (6) is then heated to a temperature of between 350 and 800°C, that the optical fibre (9) is inserted into the tube (6) after reaching this heating temperature and/or a vibration of the tube (6) begins, and that the temperature of the melt is measured subsequently.

11. The method according to claim 10, **characterised in that** the sensor device is pulled out of the melt after the measuring of the temperature and is removed from the carrier lance, and that the end of the optical fibre (9) is removed.

## Revendications

1. Agencement de capteur pour la mesure de température dans des masses fondues, notamment dans des masses fondues de cryolithe avec un point de fusion au-dessus de 600°C, avec un capteur de température qui présente une extrémité d'immersion (18), avec un récipient (7) disposé sur un support qui présente une ouverture sur son côté supérieur et dans lequel le capteur de température est disposé, dans lequel le capteur de température présente un tuyau (6) dépassant dans le récipient dans lequel une fibre optique (9) est disposée, laquelle présente au niveau de sa face d'enveloppe de manière tangente un tuyau d'enveloppe, dans lequel le tuyau (6) est fermé à son extrémité disposée dans le récipient (7), dans lequel l'extrémité fermée du tuyau (6) présente un écart de 0,1 à 5 mm du fond du récipient (7), et dans lequel la fibre optique (9) est disposée de manière mobile dans le tuyau (6).

2. Agencement de capteur selon la revendication 1, **caractérisé en ce que** le récipient (7) est connecté de manière rigide à un vibrateur.

3. Agencement de capteur selon la revendication 1 ou 2, **caractérisé en ce que** le tuyau (6) est formé d'un alliage de cuivre.

4. Agencement de capteur selon au moins une des revendications 1 à 3, **caractérisé en ce que** le tuyau (6) est enduit de cuivre ou molybdène ou d'une céramique, notamment d'oxyde d'aluminium.

5. Agencement de capteur selon au moins une des revendications 1 à 4, **caractérisé en ce que** le tuyau (6) présente un diamètre externe de 5 mm maximum.

6. Agencement de capteur selon au moins une des revendications 1 à 5, **caractérisé en ce que** l'épaisseur de paroi du tuyau (6) se monte à 2 mm maximum.

7. Agencement de capteur selon au moins une des revendications 1 à 6, **caractérisé en ce que** l'extrémité fermée du tuyau (6) présente un écart d'environ 3 mm du fond du récipient (7).

8. Agencement de capteur selon au moins une des revendications 1 à 7, **caractérisé en ce que** l'extrémité fermée du tuyau (6) est fermée par écrasement, dans lequel le rapport de la surface de section transversale ouverte restante dans l'intérieur écrasé du tuyau (6) sur la longueur de la partie de tuyau écrasée est < 0,5 mm.

9. Utilisation d'un agencement de capteur selon au moins une des revendications précédentes pour la mesure de température dans des masses fondues avec un point de fusion de plus de 600°C, notamment dans des masses fondues de cryolithe.

10. Procédé de mesure dans des masses fondues de cryolithe avec un point de fusion au-dessus de 600°C avec un agencement de capteur (4) selon au moins une des revendications précédentes, **caractérisé en ce que** l'extrémité d'immersion (18) de l'agencement de capteur (4) disposé sur une lance de support est immergée dans la masse fondue, qu'au moins la partie immergée du tuyau (6) est ensuite chauffée à une température comprise entre 350 et 800°C, qu'après atteinte de cette température de chauffage, la fibre optique (9) est insérée dans le tuyau (6) et/ou une vibration du tuyau (6) commence et que la température de la masse fondue est ensuite mesurée.

11. Procédé selon la revendication 10, **caractérisé en ce que** l'installation de capteur est tirée de la masse fondue après la mesure de la température et détachée de la lance de support et que l'extrémité de la fibre optique (9) est retirée.
